(19) Europäisches Patentamt

European Patent Office

Office européen des brevets

(11) Publication number: **0 303 017 B1**

# (12) EUROPEAN PATENT SPECIFICATION

(45) Date of publication of patent specification: **27.11.91**  (51) Int. Cl.⁵: **E01C 5/08**, E01C 5/00, E01C 23/10

(21) Application number: **88109497.3**

(22) Date of filing: **15.06.88**

(54) Floating semirigid pavement.

(30) Priority: **13.08.87 ES 8702395**

(43) Date of publication of application:
**15.02.89 Bulletin 89/07**

(45) Publication of the grant of the patent:
**27.11.91 Bulletin 91/48**

(84) Designated Contracting States:
**AT BE CH DE FR GB GR IT LI LU NL SE**

(56) References cited:
**DE-A- 1 810 012**     **DE-B- 1 218 487**
**FR-A- 1 004 695**     **GB-A- 2 149 441**
**NL-C- 3 420**         **NL-C- 89 598**
**US-A- 1 933 469**

(73) Proprietor: **Botella Soto, Javier**
**Poeta Querol, 1**
**E-46002 Valencia(ES)**

Proprietor: **Fernandez Llamas, Domingo**
**Poeta Querol, 1**
**E-46002 Valencia(ES)**

(72) Inventor: **Botella Soto, Javier**
**Poeta Querol, 1**
**E-46002 Valencia(ES)**
Inventor: **Fernandez Llamas, Domingo**
**Poeta Querol, 1**
**E-46002 Valencia(ES)**

(74) Representative: **Ungria Lopez, Javier et al**
**Avda. Ramon y Cajal, 78**
**E-28043 Madrid(ES)**

## Description

The present invention refers to a floating semirigid pavement to be specially used on newly-created surfaces.

Road paving technique has a wide bibliography and very complete and improved studies for roadbed dimensioning, with generally known or supposed estimate hypotheses, such as: traffic intensity, axle load and characteristics of the grounds on which they are built.

It is not the same thing when paving big surfaces for merchandise manipulation, especially solid bulks and containers and, most especially, when paving on lands won from the sea. Due to this, in the light of the situation as set out, we are fully going to deal with bedroads at port zones and generally on grounds which are formed by direct fillers, this being an increasing situation, as it is obvious that expanding ports have serious limitations to be able to grow towards the interior and, consequently, they must create new quays at the same time as big surfaces for merchandise storage and manipulation on artificial fillers. By way of an instance, we can cite the construction at the present time in Japan of artificial islands for building up industrial and commercial areas.

So as to concrete this matter and the necessities of a hypothetical ideal roadbed, we are going to analyze the effects nowadays produced on port pavements.

On the one hand, heavy machinery nowadays circulating at ports can even exceed 80 Tons each axle, whether they be loader-shovels or container-cars. The latter produce, in their turn, braking and turning effects on the ground itself, which can noticeably increase the pressures on the pavement, thereby degrading the contact surface.

On the other hand, the arbitrariness of movements on the pavement acts unfavourably and allows the aforementioned effects to be produced on any point thereof, perhaps the weakest one. This could be avoided by ordering operations inside a zone, this being a circumstance which in some given case may be possible, and, consequently, rolling roads could be overdimensioned, but, nevertheless, it would always be a mortgaged zone before any other planning or treatment change which could be got under way to a medium or a long term.

The above set out circumstances make the use both of rigid pavements and of flexible ones be projected with a certain scepticism, knowing that in the end the rigid ones will crack and break as a consequence of the deformations of the ground on which they rest and the flexible ones will be deformed under the effects of loads and ground settlings altogether will be surface degraded under the effects of rubbing of tires and other metal elements that make impact onto the surface, thereby also producing the breaking thereof.

As a consequence of the above, the best solution found (and so the latest publication in this regard indicate it), according to the current tendency in the U.S.A. and in the United Kingdom, is to treat this type of surfaces as paving block-type pre-manufactured elements, arranged in many different ways, knowing that the unavoidable deformations which will be produced in the pavement will have to be repaired on the grounds of the removal of the affected area, filling the cavity produced and repaving afterwards, since, nowadays, a deformed surface endangers the stability of the machinery and the stored merchandise in movements of a certain height.

In any case, as a prudential measure, any type of paving adopted carries with it a waiting period of five to ten years (once the filling phase is over) for its execution, mainly depending on the filling height and on the quality (sometimes at a high cost) of the material used. All that in order to gain filling compactness and to avoid disastrous effects on the pavement as a consequence of big settlings.

As an example for the prior art related to known techniques on the pavement field, UK patent application GB-A-2,149,441 discloses a pavement construction system comprising prefabricated concrete standard elements having an upper side and downwardly extending side walls and reinforcing ribs bound by other concrete elements. Between the concrete elements and the prefabricated elements there are interlocking elements. The space between the prefabricated elements' side walls and reinforcing ribs is filled with sand. This construction is extremely rigid and unelastic and does thus not allow momentaneous deformation and elastic recovery of the pavement when subjected to the weight of heavy machines. Furthermore, when there are soil movements the sand in the prefabricated elements can escape downwardly causing the whole pavement to sink and become definitively deformed, thus requiring expensive replacement of the sand below the pavement.

The present invention is intended to combine and improve the qualities of the above exposed systems so as to, improve the final result. Therefor, claim 1 provides a pavement being able to support said column loadings (for which the flexible one is inadequate); being able to become deformed, according to the support on which is rests (for which the rigid one is inadequate), and being able to recover to its initial state once deformed (for which the paving-block premanufactured one is inadequate), whereby a series of advantages of a great importance are achieved, among them, noticeably shortening the waiting time for paving a filler; using as filler materials of a worse quality, with the subsequent economic saving which in some cases could imply and create a multi-use area, with no special conditionings.

Referring to the above set-out requirements, the invention proposes a floating semirigid pavement, formed by mass or reinforced-concrete premanufactured pieces of varying size, joined to each other by a grillage-shaped rubber joint serving as support-junction, also of varying size.

The main characteristic is that the concrete premanufactured piece has an inner cavity in shape of a truncated cone, connected to the upper face by a hole and open by its lower base, so that it makes sand injection possible through the upper hole into the inside of the piece, compressing it afterwards.

This sand will serve as support of the piece itself.

In such a way the column loading on the premanufactured piece will transmit the pressures to the ground by three different ways: its own support, through the sand serving as its support and through the perimetric pieces by means of the support-junction joint. The perimetric pieces in their turn will work as the one receiving the load, with the subsequent transmission minimizing coefficient.

In this way, a pavement is achieved capable of supporting column loadings through the premanufactured piece, deformations through the support-junction joint and recoveries through sand injection.

Some drawings are hereto attached as a practical example of embodiment of the invention, wherein the following has been represented:

Figure 1.- It shows an upper top view, a vertical sectional view and a lower top view of one of the pieces,to which a quadrangularly-sectioned shape has been given.

Figure 2.- It shows an upper top view, a vertical sectional view and a lower top view of other piece, to which a hexagonally-sectioned shape has been given.

Figure 3.- It shows an enlarged sectional view of one of the pieces, so that its construction details can be better seen, as well as the sand layer on which it rests and which also occupies its lower cavity. Other equal pieces have been partially represented close to it in the disposition to form a pavement of the necessary amplitude.

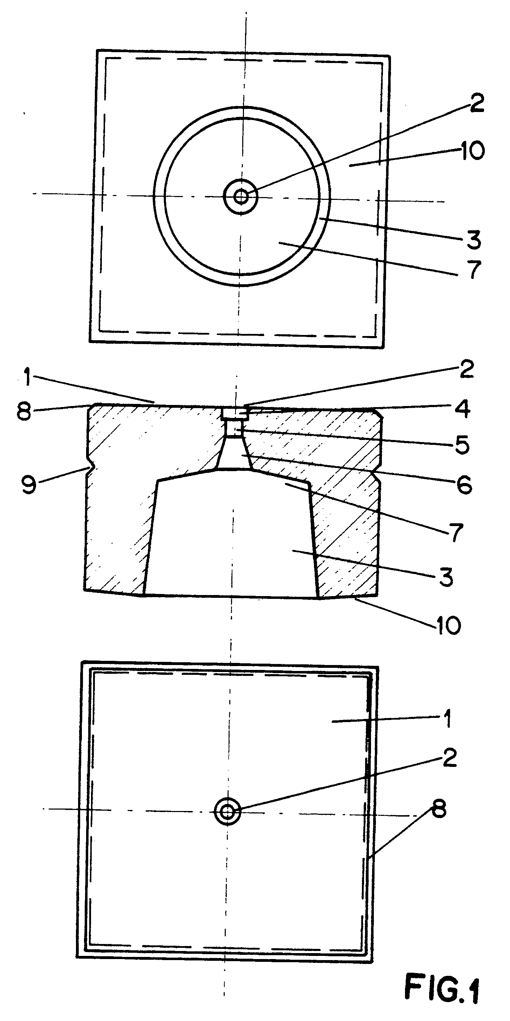

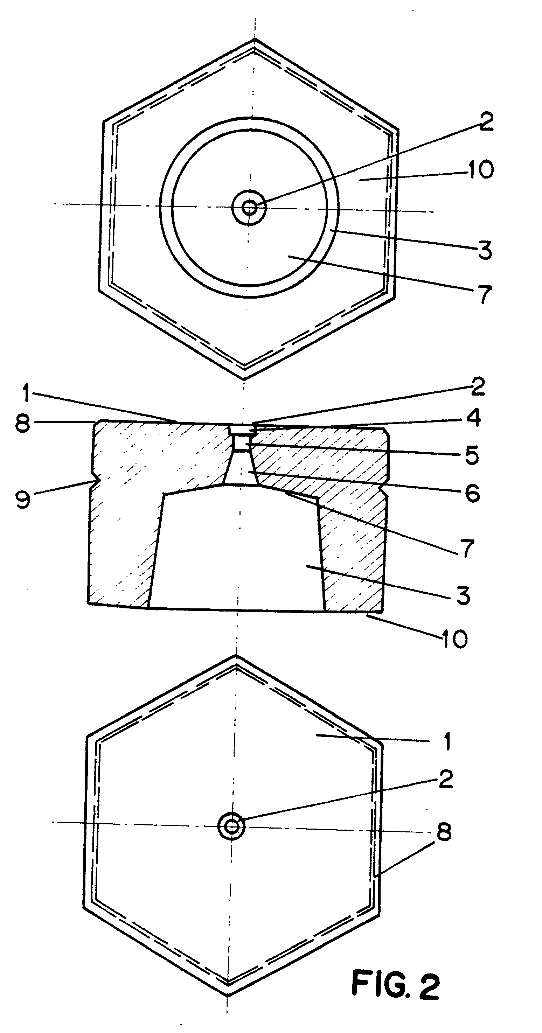

Such as it can be seen in said drawings, the pieces, regardless of their sectional shape, which may be one of those represented in figures 1 or 2 or other similar one, such as of a rectangular section, present a flat upper surface -1-, in the geometrical centre of which there is a drilling -2- that connects said upper face to an inner cavity -3-. The drilling presents an upper portion -4- of a greater diameter, a central portion -5- of a smaller diameter and a lower portion -6- of a truncated-cone section or of a similar one. The lower cavity has a truncated-cone, truncated-pyramid or similar structure, as well as its roof -7-

The upper edges -8- are beveled. There is a perimetrical groove -9- that fits a joint -15- that constitutes the lateral junction means of one piece to the other.

The groove and the joint will preferably affect the shape represented in the drawings: angular groove and square sectioned joint. The base -10- is inclined towards the geometrical centre of the piece.

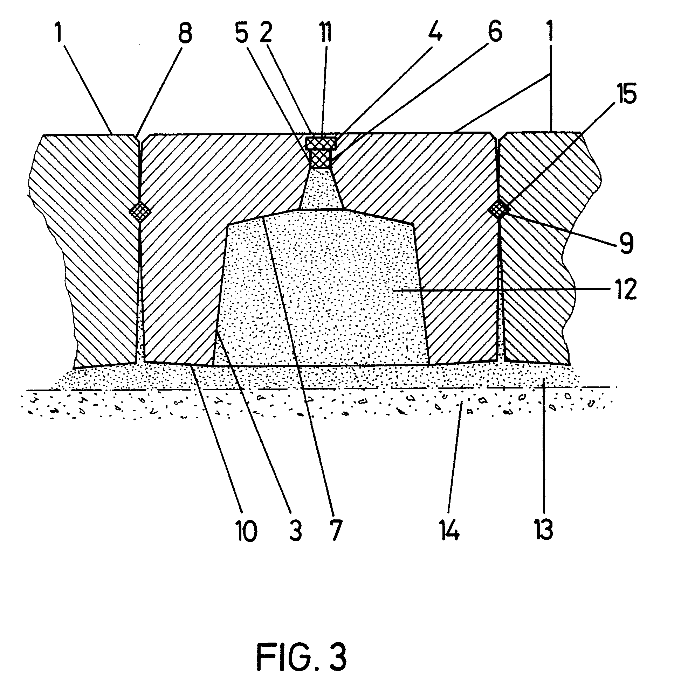

The outer walls of the pieces will have the necessary tolerance, such as it can be seen in the drawings, specially in figure 3, to facilitate the elastic turn between pieces.

The pieces cavity is sand-filled -12- and they all rest on a sand layer -13- situated on the surface to be paved -14- .

Each one of the pieces is molded in mass or reinforced concrete or in other material or material combination suitable for the use to be given to it, with respect to the requested services, that is, to the efforts to be absorbed along use.

An elastic plug -11- is arranged at the upper part of the drilling and it can be removed when sand must be injected for the recovery of the pavement.

The floating semirigid pavement is constructed as follows:

Once the ground on which the support pieces are to be placed has been extended, leveled and compacted, about 5 cm of sand are laid out to bear the support pieces, which , once they have been assembled by means of the support-junction joint, will form the definitive pavement. This operation done and before proceeding to sand injection, a vibrating roller will be passed along the surface in order to insure a perfect settling of the support pieces.

Sand is then injected inside the support pieces through their central drilling, until it can be seen that they tend to rise or the pressure on sand reaches a certain value. Said drilling is closed with the plug.

After doing this operation, the definitive pavement is ready to be used.

Meanwhile there is no deformation in the ground, the situation remains constant as in its origin, i.e., the loads applied to will be transmitted to the ground through the support piece by its own base and that of the sand placed inside it, thereby operating the aforementioned enclosure effect.

When the ground is deformed in a reduced surface, the support pieces begin to transmit stresses to the support-junction joints, the latter being consequently minimally deformed at the beginning until the support piece finds its natural support. Once the column load acts no longer, the support piece recovers its original position and, consequently, it leaves a hollow in its base, which is then filled due to the gravity by the sand contained in the lower cavity. From now on the enclosure effect acts no longer; nevertheless, the ground stresses will be practically the same, since they are compensated with the distribution of loads to the perimetrical support pieces through the corresponding joints.

As it can be seen, the base of the support piece has a slope in order to facilitate the entrance of sand when the piece recovers its initial position and so that they provide each other with the sand contained in the lower cacity through their bases along multiple load passage cycles on them, thereby balancing the partial sand consumption in each one of them.

In case of ground deformations in wide surfaces, besides the described phenomenum there will be a convexity in the pavement surface and this is why an inclination has been provided for in the surface in order to facilitate the pieces turn through the support-junction joint, as the axis thereof.

The re-injection of sand will be carried out in case sand is depleted from the inner cavity in some cases and in case or reaching the pavement deformation limit as a consequence of the turn of the support pieces through their joint in others. In any case it is advisable, once the ground is stable, to re-inject sand in the pavement in order to attain the enclosure effect and release the joints from an everlasting work.

For the case it was desired to obtain a concavity in the pavement or merely to raise or correct its grade line by reinjection, an inclination has been provided at the base in order to facilitate the turn of the pieces in the other direction with respect to the abovementioned one.

The ground on which this type of pavement is to be placed, must be drainable in order to prevent water from going up to the surface, when loads act, and to prevent the possible loss of sand by dragging. Nevertheless, in order to try to waterproof as much as possible the finished pavement, the support-junction joint will be continuous along the perimeter of the support piece and the upper hole will be closed with a rubber plug under pressure,the head of which stands beneath the finished surface to avoid its breaking.

Some situations could be arisen wherein it would be interesting to pave with the designed support pieces on stable filled or consolidated grounds wherein small differential settlings are foreseen. In such cases the support-junction joint can be deleted, the lateral faces of the pieces can be vertical and some separation joints or stops will be coupled thereto in order to guarantee in the assembly a minimum distance of about 2 mm inbetween. This separation between the vertical faces of the different pieces will be later filled with sand in order to insure a perfect coupling of the pavement.

Slight unevennesses between pieces could be corrected by re-injecting sand inside the pieces needing this operation.

The geometrical dimensions of the pieces and their shape, as well as their height, will be defined in each given case, depending on the use to which the concerned pavement was to be submitted.

## Claims

1. Floating semirigid pavement constituted by independent pieces, like paving blocks, laterally joined to each other in order to form a surface of varying amplitude, characterized in that each of the pieces is formed by a block molded in a resistant material, such as reinforced concrete, the upper face (1) thereof being flat, said piece having an inner cavity (3) connected to said upper face (1) through a hole (2), and the base (10) thereof being open, said inner cavity (3) being sand (12) injected and susceptible of being refilled through said hole (2) so as to compensate displacement movements of the pieces of pavement by occupying hollows by gravity, said base (10) being formed by one or more inclined planes with respect to the geometric axis of said piece, whereby the outer lateral walls of said piece are sufficiently inclined as to allow movement with respect to adjacent pieces and whereby the outer lateral walls of said piece are provided with a peripheral groove (9) wherein an elastic joint (15) is arranged for junction and support between pieces.

2. Floating semirigid pavement according to claim 1, wherein the inner cavity (3) of the piece has the shape of a truncated cone, a truncated pyramid or the like as well as its roof (7) and the lower zone (6) of the hole (2) connecting said cavity (3) to the upper face (1) of the piece.

3. Floating semirigid pavement according to claims 1 and/or 2 characterized in that the upper part (4) of the hole (2) connecting the inner cavity (3) to the upper face (1) of the piece is closed with a dismountable elastic plug (11) standing slightly underneath the plane of the upper face (1) of the piece.

4. Floating semirigid pavement according to claims 1-3, characterized by using as a settling base of the pieces on the surface (14) to be paved a sand layer (13), preferably a 5 cm. thick sand layer.

**Revendications**

1. Revêtement de sol semi-rigide flottant constitué d'éléments indépendants tels que des blocs de revêtement de sol, raccordés latéralement les uns aux autres afin qu'ils forment une surface d'amplitude variable, caractérisé en ce que chacun des éléments est formé d'un bloc moulé dans un matériau résistant tel que du béton armé, la face supérieure (1) étant plate, l'élément ayant une cavité interne (3) reliée à la face supérieure (1) par un trou (2) et la base (10) étant ouverte, la cavité interne (3) ayant subi une injection de sable (12) et pouvant être remplie à nouveau par le trou (2) afin que les mouvements de déplacement des éléments de revêtement soient compensés par remplissage des trous par gravité, la base (10) étant formée par un ou plusieurs plans inclinés par rapport à l'axe géométrique de l'élément, si bien que les parois latérales externes de l'élément sont suffisamment inclinées pour permettre un mouvement par rapport aux éléments adjacents, et les parois latérales externes de l'élément ont une gorge périphérique (9) dans laquelle un joint élastique (15) est disposé afin qu'il assure la jonction et le support entre les éléments.

2. Revêtement semi-rigide flottant selon la revendication 1, dans lequel la cavité interne (3) de l'élément a la forme d'un tronc de cône, d'un tronc de pyramide ou analogue, et il en est de même de son toit (7) et de la zone inférieure (6) du trou (2) reliant la cavité (3) à la face supérieure (1) de l'élément.

3. Revêtement semi-rigide flottant selon la revendication 1 et/ou 2, caractérisé en ce que la partie supérieure (4) du trou (2) reliant la cavité interne (3) a la face supérieure (1) de l'élément est fermée par un bouchon élastique démontable (11) disposé légèrement au-dessous du plan de la face supérieure (1) de l'élément.

4. Revêtement semi-rigide flottant selon les revendications 1 à 3, caractérisé par l'utilisation, comme base de tassement des éléments sur la surface (14) qui doit être revêtue, d'une couche de sable (13) ayant de préférence une épaisseur de 5 cm.

**Patentansprüche**

1. Schwimmendes, halbstarres Pflaster aus unabhängigen Teilen, wie etwa Pflastersteinen, die seitlich miteinander verbunden sind, um eine Oberfläche mit veränderlicher Amplitude zu bilden, dadurch gekennzeichnet, daß jedes der Teile aus einem aus einem widerstandsfähigen Material, wie etwa Stahlbeton, gegossenen Block besteht, dessen Oberseite (1) flach ist, wobei das Teil einen inneren Hohlraum (3) besitzt, der mit der Oberseite (1) über ein Loch (2) verbunden ist, und wobei dessen Basis (10) offen ist, wobei der innere Hohlraum (3) mit Sand gefüllt ist und geeignet ist, durch das Loch (2) wiederaufgefüllt zu werden, um Versetzungsbewegungen der Pflasterteile durch Ausfüllen von Hohlräumen durch Schwerkraft zu kompensieren, wobei die Basis (10) aus einer oder mehreren, bezüglich der geometrischen Achse des Teils geneigten Ebenen gebildet ist, wobei die äußeren Seitenwände des Teils hinreichend geneigt sind, um eine Bewegung relativ zu benachbarten Teilen zu ermöglichen, und wobei die äußeren Seitenwände des Teils mit einer peripheren Vertiefung (9) versehen sind, in der eine elastische Verbindung (15) zur Verbindung und Halterung zwischen den Teilen angeordnet ist.

2. Schwimmendes, halbstarres Pflaster nach Anspruch 1, wobei der innere Hohlraum (3) des Teils die Form eines Kegelstumpfs, eines Pyramidenstumpfs oder dergleichen besitzt, ebenso wie seine Abdeckung (7) und der untere Bereich (6) des Loches, das den Hohlraum (3) mit der Oberseite (1) des Teils verbindet.

3. Schwimmendes, halbstarres Pflaster nach Anspruch 1 und/oder 2, dadurch gekennzeichnet, daß der obere Teil (4) des Lochs, das den Hohlraum (3) mit der Oberseite (1) des Teils verbindet, mit einem abnehmbaren, elastischen Stopfen (11) verschlossen ist, der sich leicht unterhalb der Ebene der Oberseite (1) des Teils befindet.

4. Schwimmendes, halbstarres Pflaster nach den Ansprüchen 1 - 3, dadurch gekennzeichnet, daß als Setzbasis für die Teile auf der zu pflasternden Oberfläche (14) eine Sandschicht (13) und vorzugsweise eine 5 cm dicke Sandschicht verwendet wird.

**FIG.1**

**FIG. 2**

FIG. 3